# EUROPÄISCHE PATENTSCHRIFT

(11) **EP 1 736 740 B1**
(45) Veröffentlichungstag und Bekanntmachung des Hinweises auf die Patenterteilung: **08.08.2018**
(21) Anmeldenummer: 06090103.0
(22) Anmeldetag: 09.06.2006
(51) Int. Cl.: G01F 1/00, G01F 1/64, G01N 27/414

(54) **Sensor für die Bestimmung der Fliessbewegung von und/oder in Flüssigkeiten sowie seine Verwendung**
Sensor for determining the flow movement of and/or in liquids and application thereof
Capteur pour la détection du mouvement de liquide provenant de et/ou dans des liquides tout comme son utilisation

(30) Priorität: 24.06.2005 DE 102005030200
(43) Veröffentlichungstag der Anmeldung: 27.12.2006
(73) Patentinhaber: Leibniz-Institut für Polymerforschung Dresden e.V., 01069 Dresden (DE)
(72) Erfinder: Sutanto, Pagra Truman, 01309 Dresden (DE); Uhlmann, Petra, 01326 Dresden (DE); Stamm, Manfred, 01705 Freital (DE)
(74) Vertreter: Pfenning, Meinig & Partner mbB

(56) Entgegenhaltungen:
- DE-U1- 20 116 283
- US-A- 4 322 680
- US-A1- 2002 117 693

## Beschreibung

Bestimmung der Fließbewegungen von und/oder in Flüssigkeiten sowie vorteilhafte Verwendungen. Er kann in unterschiedlichsten Fluidiksystemen, in denen eine Bewegung von Flüssigkeiten und/oder die Bewegung von Objekten in Flüssigkeiten bestimmt werden sollen, eingesetzt werden. Dabei kann mit geringen Flüssigkeitsvolumen, also im Bereich der Nano- oder Mikrofluidik gearbeitet werden. Es ist auch ein Einsatz in so genannten Lab-on-Chip-Systemen möglich, wobei ein oder mehrere erfindungsgemäße Sensoren, quasi ein Flusssensorlabor auf einer Chipkarte bilden kann/können bzw. allgemein in Lab-on-Chip Systemen ein Monitoring der Flüssigkeitskanäle ermöglichen. Die elektrischen Messsignale können einfach verarbeitet und ausgewertet werden.

Für die Bestimmung von Fluss- oder Strömungsbewegungen von Flüssigkeiten werden bisher üblicherweise mechanische oder auch thermische Messverfahren eingesetzt. Dabei wird durch das Fließen der Flüssigkeit eine mechanische Kraft auf ein Bauteil ausgeübt, dass entsprechend verformt oder in Bewegung versetzt wird, so dass diese Verformung oder Bewegung bestimmt werden kann.

Zum Anderen wird bei einer thermischen Detektion eine lokale Erhitzung der Flüssigkeit durchgeführt und eine entsprechend resultierende Temperaturverteilung mit geeigneten Temperatursensoren erfasst bzw. die Kühlung des Heizdrahtes auf Grund der Umströmung mit Flüssigkeit detektiert.

Mechanische Messsysteme sind bekanntermaßen verschleißanfällig und können nur in bestimmten Grenzen miniaturisiert zur Verfügung gestellt werden. Außerdem ist keine empfindliche Beeinflussung der Sensitivität möglich.

Thermische Verfahren beeinflussen die jeweilige Flüssigkeit erheblich, was zu Veränderungen vieler Eigenschaften der jeweiligen Flüssigkeit führt. Außerdem haben unterschiedliche Temperaturen hohe Einflüsse auf physikalische Eigenschaften, wie beispielsweise die Viskosität und das Benetzungsverhalten. Außerdem werden Reaktionsabläufe von in Flüssigkeiten enthaltenen Komponenten, beispielsweise Biomolekülen erheblich beeinflusst.

Bisher eingesetzte auf elektrischen Prinzipien beruhende Detektionsverfahren beeinflussen ebenfalls das

Fließverhalten von Flüssigkeiten in unerwünschter Form.

In allen Fällen können nicht ohne weiteres kleinere Flüssigkeitsvolumina bezüglich ihres Strömungsverhaltens detektiert werden.

Für unterschiedlichste Anwendungen in der Sensorik werden aber auch seit Längerem, insbesondere Feldeffekt-Transistoren eingesetzt, wie dies beispielsweise bei der in EP 0 751 392 A2 beschriebenen Lösung der Fall ist.

Aus US 4,322,680 B1 ist eine chemisch sensitive Vorrichtung bekannt. Dabei ist auf einem Substrat eine halbleitende Schicht auf dessen Oberfläche ausgebildet. Außerdem sind Source- und Drainkontakte sowie ein chemisch sensitive Gatestruktur auf der Oberfläche der halbleitenden Schicht zwischen Source und Drain vorhanden. Die Gatestruktur kann mit chemischen Substanzen interagieren und eine elektrisches Feld in Abhängigkeit der Anwesenheit, Konzentration oder Aktivität der Substanz ausbilden.

Die US 2002/0117693 A1 betrifft einen Sensor mit organischer Transistorschaltung mit einem leitenden Kanal, dessen Leitfähigkeit in Abhängigkeit eines Geruchs/Dufts, Gases oder Dampfes verändert ist.

Es ist daher Aufgabe der Erfindung einen Sensor zur Verfügung zu stellen, mit dem Fließbewegungen von Flüssigkeiten und/oder in Flüssigkeiten mit geringem Volumen und geringer Flüsskigkeitsfilmdicke detektierbar sind.

Erfindungsgemäß wird diese Aufgabe mit einem Sensor, der die Merkmale des Anspruchs 1 aufweist, gelöst. Vorteilhafte Verwendungen sind in den Ansprüchen 12 und 13 bezeichnet.

Vorteilhafte Ausgestaltungen und Weiterbildungen der Erfindung können mit den in den untergeordneten Ansprüchen bezeichneten Merkmalen erreicht werden.

Der erfindungsgemäße Sensor für die Bestimmung von Fliessbewegungen basiert auf dem Prinzip von Feldeffekt-Transistoren. Dabei ist zumindest ein Flusskanal durch den die jeweilige Flüssigkeit ein- bzw. hindurchströmen kann vorhanden. Der Flusskanal ist mit zwei Elektroden, die in einem Abstand zueinander angeordnet sind, gebildet. Der Abstand der Elektroden sollte deutlich geringer als deren Länge sein.

Der Boden des Flusskanals, welchen die beiden Elektroden kontaktieren besteht aus einem halbleitenden Material, wobei das halbleitende Material zumindest bereichsweise mit einer isolierenden Schicht überdeckt sein kann. Dabei soll die Dicke der halbleitenden Schicht, kleiner als das Doppelte der Dicke einer ausgebildeten Raumladungszone eines Volumensubstrates sein, wobei das Volumensubstrat aus einem äquivalenten halbleitenden Material besteht. Es ist auch denkbar, dass das halbleitende Material eine Oberflächenstrukturierung(z.B. eine künstliche Rauhigkeit und/oder Porosität) aufweist, um die Sensitivität oder das Fließverhalten vorteilhaft zu beeinflussen.

Es ist nicht zwingend notwendig, dass die Elektroden gerade ausgebildet sind, vielfältige Formen sind dabei denkbar, wobei die Elektroden nicht in berührendem Kontakt stehen sollen damit der Schichtwiderstand der halbleitenden Schicht zwischen den Elektroden bestimmbar bleibt. Die eine Elektrode kann vorteilhaft ein Sourcekontakt (Quelle) und die andere Elektrode ein Drainkontakt (Senke) eines Feldeffekttransistors bilden. Das Gate des Feldeffekttransistors ist entweder eine elektrisch leitende Flüssigkeit an sich (wobei jene durch einen Isolator von der halbleitenden Schicht elektrisch isoliert ist), ein Deckelelement auf dem Flusskanal (wobei an das Deckelelement eine elektrische Spannung angelegt wird und die Flüssigkeit Teil des Dielektrikums ist), die Umgebung auf einem nicht näher spezifizierten Umgebungspotential (wobei wiederum die Flüssikeit Teil des Dielektrikums ist) oder funktionelle Gruppen auf dem Boden des Flusskanals.

Im Falle von elektrisch leitfähigen Flüssigkeiten sind die Elektroden zumindest gegenüber der Flüssigkeit elektrisch isoliert, was beispielsweise mit einer elektrisch isolierenden Oberflächenbeschichtung der Elektroden erreicht werden kann.

An die Elektroden wird bei der eigentlichen Detektion eine konstante elektrische Spannung angelegt und als Messsignal kann der zwischen Sourcekontakt und Drainkontakt über die halbleitende Schicht fließende elektrische Strom genutzt werden

Strömt eine Flüssigkeit in einen Flusskanal ein oder durch diesen hindurch, verändert sich der zwischen Sourcekontakt und Drainkontakt fließende elektrische Strom oder beim Hindurchströmen einer Flüssigkeit durch einen Flusskanal kann eine Veränderung des zwischen Sourcekontakt und Drainkontakt fließenden elektrischen Stromes auftreten und detektiert werden.

Außerdem können auch beim Ein -oder Hindurchströmen einer Flüssigkeit in bzw. durch einen Flusskanal auftretende Veränderungen der Flüssigkeit bzw. auch chemische bzw. biochemische Reaktionen einen detektierbaren Feldeffekt hervorrufen. Für eine zusätzliche potentielle Beeinflussung der jeweiligen Flüssigkeit kann eine Referenzelektrode, die bevorzugt als Ag/AgCl-Elektrode augebildet ist, in die strömende Flüssigkeit eintauchen.

Dieser Effekt kann insbesondere bei nicht-ionischen Flüssigkeiten mittels eines Deckels, der den Flusskanal überdeckt und aus einem elektrisch leitenden Werkstoff, beispielsweise elektrisch leitendem Glas, erreicht werden. Dabei werden eine Referenzelektrode oder ein solches Deckelelement mit einer konstanten vorgebbaren elektrischen Spannung beaufschlagt.

In einer besonders bevorzugten Ausführungsform des erfindungsgemäßen Sensors fungiert ein aus einem elektrisch leitenden oder halbleitenden Werkstoff gebildetes Substrat, als zusätzliches Gate, dass mit einer elektrisch nicht leitenden Isolierschicht überdeckt ist und auf der die das mit dem Flusskanal in Verbindung stehende halbleitende Schicht ausgebildet ist.

Durch zusätzliches Anlegen einer elektrischen Spannung an das Substrat kann die Sensitivität eines erfindungsgemäßen Sensors beeinflusst und entsprechend eingestellter Spannung optimiert werden.

Das Anlegen einer elektrischen Spannung an das Substrat soll so erfolgen, dass sich entlang der Längsachse des jeweiligen Flusskanals eine Spannungspotentialverteilung, bevorzugt eine lineare Spannungspotentialverteilung in bzw. entgegengesetzt zur Strömungsrichtung der Flüssigkeit einstellt.

Dadurch lässt sich nicht nur die Sensitivität des Sensors verbessern, sondern es kann auch die jeweilige Strömungsrichtung der Flüssigkeit oder innerhalb der Flüssigkeit detektiert werden.

Die Spannungspotentialdifferenz muss dabei nicht zwingend über die gesamte Länge des Flusskanals vorhanden sein, was mit entsprechender Anordnung in einem Abstand von Kontaktelementen am Substrat erreichbar ist.

Vorteilhaft für die letztendliche Herstellung eines erfindungsgemäßen Sensors kann ein so genanntes Silicon-on-Insulator-Substrat (SOI) eingesetzt werden, auf den in an sich bekannter Dünnschichttechnik die für die Detektion und die Ausbildung von Flusskanälen gewünschten Elektroden und Isolationen aufgebracht werden können.

So lassen sich die erfindungsgemäßen Sensoren kostengünstig und sehr klein herstellen.

Es können aber auch andere halbleitende Werkstoffe an Stelle von Silicium eingesetzt werden.

Bei einem erfindungsgemäßen Sensor können aber auch mehrere Flusskanäle ausgebildet sein. Dabei können in Flusskanälen unterschiedliche Untersuchungen durchgeführt werden. Es besteht dadurch aber auch die Möglichkeit, wenn die Flusskanäle parallel zueinander ausgerichtet sind, den Verlauf von Flüssigkeitsfronten oder den Verlauf einer Verteilungsfront strömende Partikel, Bläschen oder anderer Objekte beim Ein- und Hindurchströmen durch solche Flusskanäle zu erfassen.

Mit dem erfindungsgemäßen Sensor können unterschiedliche Untersuchungen an der durch den Flusskanal strömenden Flüssigkeit vorgenommen werden. So kann die Strömungsgeschwindigkeit, die jeweils benetzte bzw. mit Flüssigkeit überdeckte Oberfläche innerhalb von Flusskanälen detektiert werden, wodurch wiederum Rückschlüsse auf das Benetzungsverhalten bzw. die Viskosität der Flüssigkeit erhalten werden können.

Die Oberflächen von Flusskanälen können aber ganz bzw. auch lediglich bereichsweise mit mindestens einer funktionellen Schicht versehen sein, wodurch weitergehende Untersuchungen der in den Flusskanal ein- oder durch den Flusskanal hindurchströmenden Flüssigkeit möglich werden können.

Beispiele für solche funktionellen Schichten sind Polymerbürsten, Polyelektrolytbürsten, Silanbeschichtungen, funktionelle Schichten, die mit Polymeren, Rezeptoren, Proteinen oder Biomolekülen gebildet sind.

Dadurch lassen die sich je nach gewählter funktioneller Schicht unterschiedliche Untersuchungen an der strömenden Flüssigkeit durchführen. So können beispielsweise mit Polyelektrolytbürsten, als funktioneller Schicht, Bewegungen von Flüssigkeitsfronten, oder die mögliche Adsorption von Proteinen auf Polyelektrolytbürsten detektiert werden. Auch eine Charakterisierung der funktionellen Schicht in Flüssigkeit ist denkbar.

Bei funktionellen Schichten mit Polymeren kann beispielsweise das Benetzungsverhalten mit der jeweiligen Flüssigkeit bestimmt werden.

Im Falle von funktionellen Schichten, die mit Rezeptoren, Proteinen oder Biomolekülen gebildet sind, lassen sich bei biochemische Reaktionen oder Wechselwirkungen durchführen.

Für Untersuchungen mit einem erfindungsgemäßen Sensor können Flüssigkeiten eingesetzt werden, in denen bestimmte Ionen, Farbstoffe, Tenside, Gasbläschen, Flüssigkeitströpfchen und/oder Partikel enthalten sein können. Dabei können insbesondere bei in der Flüssigkeit enthaltenen Ionen, Gasbläschen, Flüssigkeitströpfchen und/oder Partikeln Veränderungen der räumlichen Verteilung der Dielektrizitätskonstanten und/oder der Ladungsdichte detektiert werden.

Um die erfindungsgemäßen Sensoren zu eichen bzw. kallibrieren, scheint der Einsatz von Eichflüssigkeiten vorteilhaft zu sein.

Insbesondere bei erfindungsgemäßen Sensoren mit mehreren Flusskanälen kann zumindest ein Flusskanal für die Detektion einer Eichflüssigkeit genutzt werden.

Nachfolgend soll die Erfindung beispielhaft näher erläutert werden.

Dabei zeigen:
- Figur 1: in schematischer Form ein Beispiel eines Sensors;
- Figur 2: ein Beispiel zur Bestimmung der Fließbewegung und Flüssigkeitsbenetzung an einem Beispiel eines Sensors;
- Figur 3: in schematischer Form ein weiteres Beispiel eines erfindungsgemäßen Sensors;
- Figur 4: ein Beispiel eines erfindungsgemäßen Sensors mit einer angelegten Potentialdifferenz und
- Figur 5: ein Beispiel für die Bestimmung eines Flüssigkeitsfrontverlaufes.

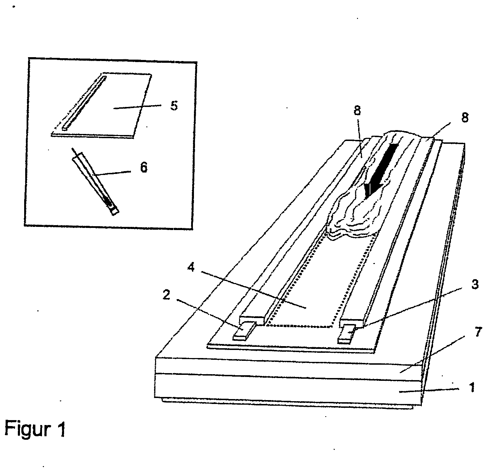

Die in den Figuren 1 bis 3 und 5 gezeigten Beispiele können als Basis für einen erfindungsgemäßen Sensor dienen.

In Figur 1 ist in einer schematischen und perspektivischen Darstellung ein Beispiel eines Sensors gezeigt. Dabei sind auf den Silicium-Dünnfilm eines Silicon-on-Insulator (SOI)Substrates parallel zueinander ausgerichtete elektrisch leitende Elektroden in an sich bekannter Dünnschichttechnik, beispielsweise durch CVD-Verfahren, Aufdampfen oder Sputterprozesse aufgebracht worden. Der Silicium-Dünnfilm ist dabei elektrisch leitend mit den Elek-troden verbunden, wobei die Elektroden Source 2 und Drain 3 kontaktieren. Mit 4 ist der Gatebereich gekennzeichnet, d.h. der Bereich der halbleitenden Schicht dessen Reaktionen auf elektrische Feldänderungen detektiert werden.

Sourcekontakt 2 und Drainkontakt 3 sind außerdem mit einer Isolationsschicht 8, bis auf Kontaktanschlüsse 2 überdeckt.

Zwischen Sourcekontakt 2 und Drainkontakt 3 ist mit diesen ein Flusskanal für eine zu detektierende Flüssigkeit, die in den Flusskanal ein- oder durch diesen hindurchströmt, ausgebildet. Die Flüssigkeitsströmung ist in Figur 1 schematisch angedeutet und die Strömungsrichtung durch den Pfeil gekennzeichnet.

Das Substrat 1 aus Silicium ist mit einer Isolationsschicht 7 überdeckt. Über der Isolationsschicht zwischen Sourcekontakt 2 und Drainkontakt 3 ist der Silicium-Dünnfilm ausgebildet. Dabei kann die gesamte oder ein Teil der Fläche des Flusskanals zwischen Sourcekontakt 2 und Drainkontakt 3 einen sensitiven Bereich des Sensors bilden.

Für eine Definition von Randbedingungen kann eine Referenzelektrode 6, bevorzugt als Ag/AgCl-Elektrode in die strömende Flüssigkeit eingetaucht werden.

Anstelle einer Referenzelektrode 6 kann aber insbesondere für eine Untersuchung an nicht-ionischen Flüssigkeiten der Flusskanal mit einem elektrisch leitfähigen Deckelelement 5 abgedeckt werden, z.B. von oben auf die zur Vermeidung von Ionenströmen auf Sourcekontakt 2 und Drainkontakt 3 ausgebildeten Isolationsschichten 8 und den Flusskanal. Dabei besteht die Möglichkeit das elektrisch leitfähige Deckelelement 5 mit den in dem Flusskanal ein- oder durch den Flusskanal hindurchströmenden Flüssigkeitsstrom in Kontakt zu bringen. Am elektrisch leitenden Deckelelement 5 ist eine Anschlusselektrode für eine elektrische Spannung ausgebildet.

Bei Ein- oder Hindurchströmen der Flüssigkeit durch den Flusskanal verändert sich bei konstanter elektrischer Spannung der Strom zwischen Sourcekontakt 2 und Drainkontakt 3 durch die halbleitende Schicht, über der sich der Flusskanal befindet, je nach dem wie viel Flüssigkeit in den Flusskanal eingetreten und entsprechender sensitiver Bereich innerhalb des Flusskanals mit Flüssigkeit benetzt worden ist.

Dadurch kann der Fluss einer solchen Flüssigkeit im Flusskanal detektiert und ggf. auch auf bestimmte weitere Eigenschaften der Flüssigkeit geschlossen werden.

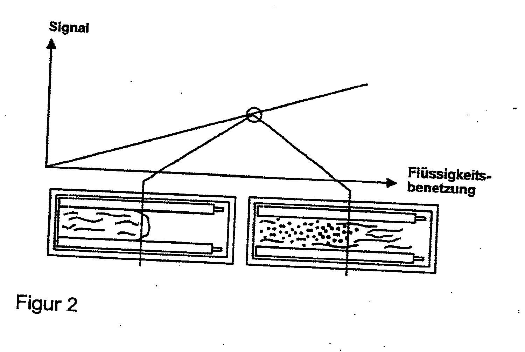

Mit Figur 2 soll das erfassbare Messsignal bei in einen Flusskanal einströmender Flüssigkeit oder einer Strömung einer Flüssigkeit durch einen Flusskanal in der zum Beispiel Partikel enthalten sind, verdeutlicht werden.

Dabei kann ein Messsignal mit nahezu konstantem linearen Anstieg detektiert werden, wobei der jeweilige Messsignalwert beispielsweise ein Maß der benetzten Oberfläche, linke untere Darstellung von Figur 2 oder ein Maß für in einer Flüssigkeit durch den Flusskanal mitströmende Partikel (rechte untere Darstellung von Figur 2) darstellen kann. Der Signalverlauf muss nicht linear sein, ein annähernd stetig monoton wachsender oder fallender Signalverlauf ist ebenfalls denkbar.

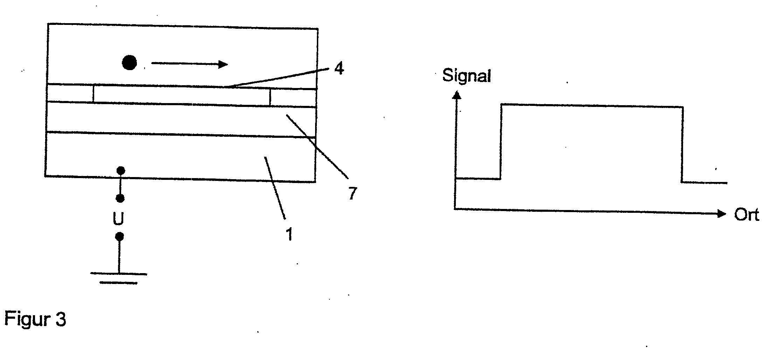

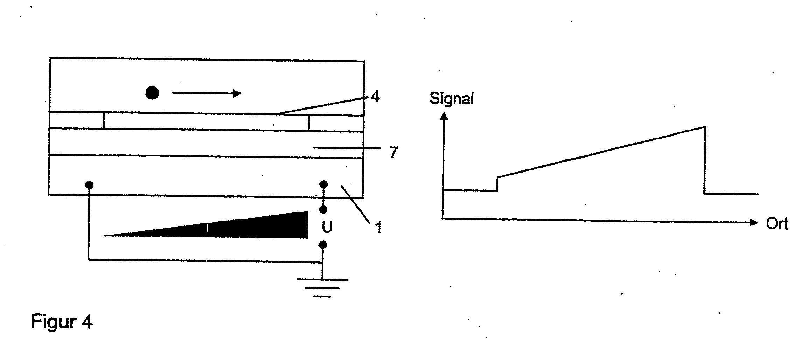

Mit den Figuren 3 und 4 sollen Möglichkeiten für die Beeinflussung der Sensitivität an erfindungsgemäßen Sensoren verdeutlicht werden.

So ist in Figur 3 an das Substrat 1 eine zusätzliche elektrische Spannung angelegt, so dass das Substrat 1 quasi ein zusätzliches Gate bilden kann. Mit der jeweiligen elektrischen Spannung kann auch die gewünschte Sensitivität angepasst, verbessert oder gar optimiert werden.

In Figur 4 ist eine Weiterbildung einer Lösung nach Figur3 gezeigt.

Hierbei wird erfindungsgemäß an das Substrat 1 eine elektrische Potentialdifferenz zwischen zwei Kontakten eingestellt, wobei die Anordnung der Kontaktanschlüsse parallel zur Strömungsrichtung der Flüssigkeit durch den Flusskanal gewählt sein sollte, so dass zusätzlich als Information neben der verbesserten Sensitivität auch die jeweilige Strömungsrichtung der Flüssigkeit bzw. von in der Flüssigkeit strömenden Partikeln detektiert werden kann. Außerdem können die jeweilige Position von Partikeln, also eine zeit- und ortsaufgelöste Messung erfolgen.

Durch den mit der Potentialdifferenz erreichbaren elektrischen Spannungsgradienten ist die Empfindlichkeit des Sensors am Flusskanal lokal unterschiedlich.

Beim in Figur 4 gezeigten Beispiel wurde der Spannungsgradient so eingestellt, dass die Empfindlichkeit von links nach rechts ansteigt. Bewegt sich ein oder bewegen sich mehrere Partikel in der Flüssigkeit entsprechend ebenfalls von links nach rechts kann ein ansteigendes Signal detektiert werden. Aus dem jeweiligen Signalwert kann die Position eines Partikels oder eines anderen Probenkörpers in der Flüssigkeit bestimmt werden. Wird ein Partikel oder sind in der Flüssigkeit Gasbläschen oder Flüssigkeitströpfchen enthalten, die dann in der Flüssigkeit von rechts nach links strömen wird ein abfallendes Signal detektiert.

In analoger Form lassen sich dann auch die Position einer Flüssigkeitsfront und die Strömungsrichtung der Flüssigkeit detektieren.

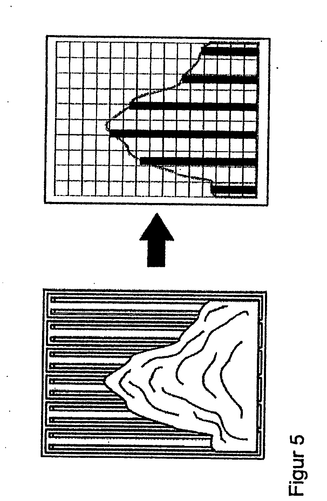

In Figur 5 sind Möglichkeiten für die Detektion eines Flüssigkeitsfrontverlaufes mit mehreren parallel zueinander angeordneten Flusskanälen, die wiederum jeweils mit zwei Elektroden, als Sourcekontakt 2 und Drainkontakt 3 gebildet sind, vorhanden. In der linken Darstellung von Figur 5 ist dabei der Flüssigkeitsfrontverlauf einer Flüssigkeit, die durch mehrere solcher Flusskanäle einströmt und in der rechten Darstellung die jeweiligen von den einzelnen Messkanälen erfassten Messsignale angegeben. Die Darstellung ist dabei nicht maßstabsgerecht, da ein solcher Sensor durch die erreichbare Miniaturisierung eine sehr dichte kompakte Anordnung mehrerer solcher Flusskanäle nebeneinander ermöglicht.

In nicht dargestellter Form können auf dem Boden und ggf. auch auf den Wänden des Flusskanals zumindest bereichsweise auch mindestens eine funktionelle Schicht, wie im allgemeinen Teil der Beschreibung ausgeführt, vorhanden sein mit deren Hilfe dann weitere Untersuchungen mit einem erfindungsgemäßen Sensor möglich sind.

## Patentansprüche

1. Sensor für die Bestimmung der Fliesbewegungen von und/oder in Flüssigkeiten, bei dem mindestens ein Flusskanal mit jeweils zwei gegenüber der zu detektierenden Flüssigkeit elektrisch isolierten und in einem Abstand zueinander angeordneten Elektroden, ausgebildet und der Boden des Flusskanals mit einer Schicht eines halbleitenden Werkstoffes gebildet sind, wobei
die eine Elektrode einen Sourcekontakt (2), die andere Elektrode einen Drainkontakt (3) und ein Bereich der halbleitenden Schicht, dessen Reaktionen auf elektrische Feldänderungen detektiert werden, oder
eine elektrisch leitende Flüssigkeit, wobei die elektrisch leitende Flüssigkeit durch einen Isolator von der halbleitenden Schicht elektrisch isoliert ist, das Gate (4) eines FeldeffektTransistors bilden, wobei
die Fließbewegung mittels des sich entsprechend verändernden elektrischen Stroms zwischen den Elektroden oder zwischen den Elektroden und der Schicht aus halbleitendem Werkstoff bei angelegter konstanter elektrischer Spannung bestimmt wird;
**dadurch gekennzeichnet, dass** 1 Mittel zum Einstellen einer elektrischen Potentialdifferenz und zwei Kontakte, die parallel zur Strömungsrichtung der Flüssigkeit angeordnet sind, vorhanden sind, wobei die Mitteln zum Einstellen einer elektrischen Potentialdifferenz so ausgebildet sind, dass zwischen den zwei Kontakten ein elektrischer Spannungsgradient eingestellt werden kann, so dass die Empfindlichkeit des Sensors am Flusskanal lokal unterschiedlich ist.

2. Sensor nach Anspruch 1, **dadurch gekennzeichnet, dass** in die durch den Flusskanal strömende Flüssigkeit eine Referenzelektrode (6) eintaucht.

3. Sensor nach Anspruch 1 oder 2, **dadurch gekennzeichnet, dass** der Flusskanal mit einem elektrisch leitenden Deckelelement (5) abgedeckt ist.

4. Sensor nach Anspruch 3, **dadurch gekennzeichnet, dass** die Referenzelektrode (6) als Ag/AgCl-Elektrode ausgebildet ist.

5. Sensor nach einem der vorhergehenden Ansprüche, **dadurch gekennzeichnet, dass** der halbleitende Werkstoff eine Oberflächenstrukturierung aufweist.

6. Sensor nach Anspruchs , **dadurch gekennzeichnet, dass** der halbleitende Werkstoff eine Rauhigkeit und/oder eine Porosität aufweist.

7. Sensor nach einem der vorhergehenden Ansprüche, **dadurch gekennzeichnet, dass** der Boden und/oder die Wände des Flusskanals zumindest bereichsweise mit einer funktionellen Schicht versehen ist/sind.

8. Sensor nach einem der vorhergehenden Ansprüche, **dadurch gekennzeichnet, dass** in einem oder mehreren Flusskanal/-kanälen unterschiedliche funktionelle Schichten vorhanden sind.

9. Sensor nach einem der vorhergehenden Ansprüche, **dadurch gekennzeichnet, dass** eine funktionelle Schicht als Polymerbürste, Polyelektrolytbürste, aus- oder mit einem Polymer, mit Rezeptoren, mit Proteinen oder Biomolekülen gebildet ist.

10. Sensor nach einem der vorhergehenden Ansprüche, **dadurch gekennzeichnet, dass** ein Substrat (1) aus einem elektrisch leitenden oder halbleitenden Werkstoff gebildet ist und eine Isolatorschicht (7) zwischen Substrat (1) und der das Gate (4) bildenden Schicht ausgebildet ist.

11. Sensor nach einem der vorhergehenden Ansprüche, **dadurch gekennzeichnet, dass** in der Flüssigkeit Ionen, Farbstoff, Tenside, Gasbläschen, Flüssigkeitströpfchen und/oder Partikel enthalten sind.

12. Verwendung eines Sensors nach einem der Ansprüche 1 bis 11 zur Bestimmung der Strömung, der Viskosität und/oder des Benetzungsverhaltens.

13. Verwendung eines Sensors nach einem der Ansprüche 1 bis 11 zur Bestimmung der räumlichen Verteilung von Dielektrizitätskonstanten, der Ladungsträgerdichte, spezifischer chemischer, biochemischer Reaktionen und/oder Adsorptionsprozessen.

## Claims

1. A sensor for determining the flow movements of and/or in liquids in which at least one flow passage is formed which has a respective two electrodes electrically insulated with respect to the liquid to be detected and arranged at a spacing from one another and in which the base of the flow passage is formed by a layer of a semiconductive material, wherein
the one electrode forms a source contact (2), the other electrode forms a drain contact (3), and a region of the semiconductive layer whose reactions to electrical field changes are detected or
an electrically conductive liquid forms the gate (4) of a field effect transistor, wherein the electrically conductive liquid is electrically insulated from the semiconductive layer by an insulator; wherein
the flow movement is determined by means of the correspondingly changing electric current between the electrodes or between the electrodes and the layer of semiconductive material with an applied constant electrical voltage,
**characterized in that**
means are present for setting an electrical potential difference and two contacts are present that are arranged in parallel with the direction of flow of the liquid, with the means for setting an electrical potential difference being configured such that an electrical voltage gradient can be set between the two contacts so that the sensitivity of the sensor at the flow passage differs locally.

2. A sensor in accordance with claim 1, **characterized in that** a reference electrode (6) dips into the liquid flowing through the flow passage.

3. A sensor in accordance with claim 1 or claim 2, **characterized in that** the flow passage is covered by an electrically conductive cover element (5).

4. A sensor in accordance with claim 3, **characterized in that** the reference electrode (6) is formed as an Ag/AgCI electrode.

5. A sensor in accordance with one of the preceding claims, **characterized in that** the semiconductive material has a surface structure.

6. A sensor in accordance with claim 5, **characterized in that** the semiconductive material has a roughness and/or a porosity.

7. A sensor in accordance with one of the preceding claims, **characterized in that** the base and/or the walls of the flow passage is/are at least regionally provided with a functional layer.

8. A sensor in accordance with one of the preceding claims, **characterized in that** different functional layers are present in one or more flow passages.

9. A sensor in accordance with one of the preceding claims, **characterized in that** a functional layer is formed as a polymer brush, as a polyelectrolyte brush, from or using a polymer, using receptors, using proteins or biomolecules.

10. A sensor in accordance with one of the preceding claims, **characterized in that** a substrate (1) is formed from an electrically conductive or semiconductive material and an insulator layer (7) is formed between the substrate (1) and the layer forming the gate (4).

11. A sensor in accordance with one of the preceding claims, **characterized in that** ions, a colorant, surfactants, gas bubbles, liquid droplets and/or particles are included in the liquid.

12. Use of a sensor in accordance with one of the claims 1 to 11 for determining the flow, the viscosity and/or the wetting behavior.

13. Use of a sensor in accordance with one of the claims 1 to 11 for determining the spatial distribution of dielectricity constants, the charge carrier density, specific chemical reactions, biochemical reactions and/or adsorption processes.

## Revendications

1. Capteur pour la détermination des mouvements d'écoulement de liquides et/ou dans des liquides, dans lequel est constitué au moins un canal d'écoulement avec respectivement deux électrodes isolées électriquement vis-à-vis du liquide à détecter et disposées à distance l'une de l'autre, et le fond du canal d'écoulement est formé d'une couche d'un matériau semi-conducteur, une électrode formant un contact de source (2), l'autre électrode formant un contact de drain (3), et une zone de la couche semi-conductrice dont les réactions à des variations de champ électrique sont détectées, ou un liquide électriquement conducteur - le liquide électriquement conducteur étant isolé électriquement de la couche semi-conductrice par un isolateur - formant la grille (4) d'un transistor à effet de champ,
le mouvement d'écoulement étant déterminé au moyen de l'intensité électrique variant en conséquence entre les électrodes ou entre les électrodes et la couche en matériau semi-conducteur en présence d'une tension électrique constante appliquée ;
**caractérisé**
**par** la présence de moyens destinés au réglage d'une différence de potentiel électrique et de deux contacts qui sont disposés parallèlement à la direction d'écoulement du liquide, les moyens destinés au réglage d'une différence de potentiel électrique étant constitués de telle sorte que, entre les deux contacts, un gradient de tension électrique peut être réglé entre les deux contacts de telle sorte que la sensibilité du capteur sur le canal d'écoulement est localement différente.

2. Capteur selon la revendication 1, **caractérisé en ce qu'**une électrode de référence (6) plonge dans le liquide s'écoulant à travers le canal d'écoulement.

3. Capteur selon la revendication 1 ou 2, **caractérisé en ce que** le canal d'écoulement est recouvert par un élément de couverture (5) électriquement conducteur.

4. Capteur selon la revendication 3, **caractérisé en ce que** l'électrode de référence (6) est constituée en tant qu'électrode Ag/AgCI.

5. Capteur selon l'une des revendications précédentes, **caractérisé en ce que** le matériau semi-conducteur présente une structuration superficielle.

6. Capteur selon la revendication 5, **caractérisé en ce que** le matériau semi-conducteur présente une rugosité et/ou une porosité.

7. Capteur selon l'une des revendications précédentes, **caractérisé en ce que** le fond et/ou les parois du canal d'écoulement est/sont muni(es) au moins par tronçons d'une couche fonctionnelle.

8. Capteur selon l'une des revendications précédentes, **caractérisé par** la présence de couches fonctionnelles différentes dans un ou plusieurs canal/canaux d'écoulement.

9. Capteur selon l'une des revendications précédentes, **caractérisé en ce qu'**une couche fonctionnelle est formée en tant que brosse de polymères, brosse de polyélectrolytes, d'un ou avec un polymère, avec des récepteurs, des protéines ou des biomolécules.

10. Capteur selon l'une des revendications précédentes, **caractérisé en ce qu'**un substrat (1) est formé d'un matériau électriquement conducteur ou semi-conducteur et **en ce qu'**une couche d'isolateur (7) est constituée entre le substrat (1) et la couche formant la grille (4).

11. Capteur selon l'une des revendications précédentes, **caractérisé en ce que** des ions, un colorant, des tensioactifs, des bulles de gaz, des gouttelettes de liquide et/ou des particules sont contenus dans le liquide.

12. Utilisation d'un capteur selon l'une des revendications 1 à 11, destinée à la détermination de l'écoulement, de la viscosité et/ou du comportement au mouillage.

13. Utilisation d'un capteur selon l'une des revendications 1 à 11, destinée à la détermination de la répartition dans l'espace de constantes diélectriques, de la densité de porteurs de charges, de réactions chimiques spécifiques, biochimiques et/ou de processus d'adsorption.
